# EUROPEAN PATENT APPLICATION

(11) **EP 4 455 499 A1**
(43) Date of publication of application: **30.10.2024**
(21) Application number: 23169429.0
(22) Date of filing: 24.04.2023
(51) Int. Cl.: F16C 17/02, F16C 17/04, F16C 17/10, F16C 32/06, F16C 37/00

(54) **HIGH SPEED ELECTRICAL MACHINE**

(71) Applicant: Celeroton AG, 8604 Volketswil (CH)
(72) Inventor: LOOSER, Andreas, 8604 Volketswil (CH); BLASER, Manuel, 8604 Volketswil (CH); BOSSHARD, Daniel, 8604 Volketswil (CH); DIETMANN, Fabian, 8604 Volketswil (CH); BÜHLER, Philipp, 8604 Volketswil (CH)
(74) Representative: Frei Patent Attorneys

(57) **Abstract**

An electrical machine comprises a stator (1) with a stator body (25) supporting an electrical stator (3) and a rotor (5), the rotor (5) being supported by means of a bearing comprising a radial bearing section (17) forming a radial gas bearing and an axial bearing section (12) forming an axial gas bearing, the stator side parts of these bearing sections comprising an axial bearing assembly (11) and a bushing (18).

Therein
• the bushing (18) is radially surrounded by the stator body (25),
• a coolant gap (82) is present between the bushing (18) and the stator body (25), the coolant gap (82) preferably extending around the entire circumference of the bushing (18),
• a fluid coolant medium (81) is present in the coolant gap (82).

## Description

The invention relates to the field of electrical machines, in particular to high-speed electrical machines with gas bearings.

An electric motor generally comprises a rotor and a stator, the stator comprising a stator body supporting and housing an electrical stator and bearings. The position of the bearings relative to the stator body can be defined by bearing flanges of the stator body. Often, two journal bearings are present, typically located at opposite sides of the stator. The precision of the alignment of the bearings in this case is mainly defined by the precision with which the bearing flange and stator body are machined. With fluid film and in particular for gas bearings, precise alignment is crucial and this arrangement in general requires special measures such as self-aligning or compliant bushing mountings, or machining, e.g. reaming, of the pair of bearings after assembly. Alternatively, the journal bearings can be arranged on the same side of the stator. This arrangement is often called overhanging motor design. With the overhanging design, the two journal bearings can be integrated into a single part, thus precise bearing alignment is easier to achieve. However, this approach generally results in longer rotors and therefore more critical dynamic behaviour of the rotor. **Furthermore, windage losses, caused by air resistance, are increased, with a negative impact on the overall motor efficiency.**

WO 03/019753 A2 shows a spindle motor in which the rotor rotates in the stator within a thin layer of epoxy forming a cylindrical through bore in the stator and serving to define both a radial bearing surface and an axial bearing surface. The thin layer of epoxy is directly coupled to the stator housing, and any thermally induced deformations of the housing will immediately affect the geometry of the bearing.

US 2006/0061222 A1 shows a compressor with an electrical motor and two journal bearings located at opposite sides of the stator. Air provided by the compressor is forced through the electrical motor and flows past the outside of a section of the journal bearings. The bearings are cooled by a bearing cooling inlet supplying air to the air gap of the journal bearings.

US 2006/0186750 A1 shows a motor of the overhanging type, for driving a spindle in a high-precision machine tool. Air is supplied to journal bearings, and cooling water flows through a cooling jacket that is in thermal contact with the journal bearings

JPH066739 and JPS60064321U show journal bearings in which air supplied to the journal bearings flows along part of the outside of stator side bearing sleeves.

WO 2017/202941 A1 discloses an electrical machine and associated rotor which address the abovementioned issues by supporting the rotor by means of a radial bearing section forming a radial gas bearing and an axial bearing section forming an axial gas bearing, the stator side parts of these bearing sections being a stator side radial bearing part and a stator side axial bearing part which are rigidly connected to one another and together form a stator bearing structure. It has become apparent that there is a need for transferring heat, e.g. from windage losses (caused by relative movement of the rotor in the stator bore and by relative movement of the bearing surfaces and the air in the air bearings) and electromagnetic losses, away from the rotor and the bearings.

WO 2020/002509 A1 discloses a high-speed electrical machine with a stator body supporting an electrical stator and a rotor. A stator side radial bearing part is constituted by a bushing. The bushing is radially surrounded by a cooling body, and the bushing is connected to the cooling body by an elastic support comprising a thermally conducting filler. This allows to efficiently transport heat away from the stator bearing structure, in particular from the bushing. The elastic support allows to compensate for a possible deformation of the stator parts, e.g., by thermal expansion, and to improve vibration characteristics. The cooling body can be radially surrounded by and thermally coupled to a stator flange for cooling the stator body. An electrically non-conducting and thermally conducting gap tube can be attached to the stator radially adjacent to the rotor where the rotor comprises a permanent magnet, and a heat transfer wall and/or a heat transfer flange are thermally coupled to the gap tube. The cooling body and the heat transfer flange can comprise coolant channels. This allows to cool the air gap of the motor via the heat transfer wall and the other parts of the stator body. There is a need for further improvement of the cooling, or at least for alternative ways of cooling.

It is therefore an object of the invention to create an electrical machine of the type mentioned initially, designed for high speeds and with improved or at least alternative means of cooling, in particular of cooling the fluid bearing.

These objects are achieved by an electrical machine according to the corresponding independent claims.

The electrical machine comprises a stator with a **stator body** supporting an electrical stator and a rotor, the rotor being supported by means of a bearing comprising a **radial bearing section** forming a radial **gas** bearing and an **axial bearing section** forming an axial **gas** bearing, the stator side parts of these bearing sections comprising an **axial bearing assembly** and a **bushing,**
wherein
- the bushing is radially surrounded by the stator body,
- a **coolant gap** is present between the bushing and the stator body, the coolant gap preferably extending around the entire circumference of the bushing,
- a fluid **coolant medium** is present in the coolant gap.

This allows to directly and efficiently cool the bushing via the coolant medium. The construction of the arrangement can be made relatively simple if the bushing comprises all the radial bearing sections of the machine.

If the fluid coolant medium is a gas or in gas form during operation of the machine, then it typically is forced to flow through the coolant gap. This makes it possible to carry away energy at a sufficient rate by means of convection.

If the fluid coolant medium is a liquid or in liquid form during operation of the machine, then it can be forced to flow through the coolant gap. In embodiments, it can remain at rest in the coolant gap, acting as a buffer for heat energy, thanks to its thermal capacity. The thermal capacity of the liquids can be higher than that of metals or ceramics commonly used in such machines. Typically, the thermal capacity of the liquid is at least two or three or four times higher than that of the material or materials of the stator body.

The coolant medium typically is water, alcohol, a mixture of these. It can be a process fluid that is pumped by the machine.

In embodiments, the bushing is supported in the stator body by at least one **elastic support.**

The fact that there is a gap between the bushing and stator body allows for relative movement between the two. The relative movement can be stabilised and dampened by the elastic support.

In embodiments, elements acting as the elastic support also act as gaskets sealing the coolant gap at one or both of its ends.

In embodiments, the coolant gap extends along at least 60% or 70% or 80% or 90% or 100% of the bushing.

In embodiments, the electrical machine comprises **coolant conduits** guiding the coolant medium, the coolant conduits being shaped by grooves in a surface at which an **inner stator disc** faces the stator body at a **contact surface** of the stator body, and/or grooves in the contact surface.

In this way, the inner stator disc and thereby the axial bearing assembly can be cooled.

In embodiments, the electrical machine comprises coolant guiding elements shaped to induce a helical flow of the coolant medium around an outer surface of the bushing. By the coolant medium flowing along a helical path around the bushing, the cooling effect around the circumference and along the length of the bushing can be homogenised.

In embodiments, the coolant guiding elements are at least one of
- a **coolant inlet plenum** arranged to guide the coolant medium into the coolant gap along a helical path,
- **coolant guiding structures** on an outer surface of the bushing facing the stator body,
- coolant guiding structures on an inner surface of the stator body facing the bushing.

The coolant inlet plenum can guide the coolant medium into the coolant gap at an angle relative to the axis of rotation. The angle can be between 10° (nearly parallel to the axis of rotation) and 90° (normal to the axis of rotation). Preferably, it is between 30° and 85°.

The coolant guiding structures can be shaped on or attached to the outer surface of the bushing or the inner surface of the stator body. They can be grooves in the respective surface, or fins or ribs on the respective surface.

The coolant guiding structures on the bushing can also act to increase the heat transfer surface of the bushing, thereby increasing heat transfer from the bushing to the coolant medium.

In embodiments, an electrically non-conducting and thermally conducting **gap tube** or **gap bars** are attached to the stator at an axial position along the rotor at which the rotor comprises a permanent magnet, and wherein the coolant medium is guided to come into contact with the gap tube or gap bars, for cooling the gap tube or gap bars.

By the coolant medium coming into immediate contact with the gap tube, cooling of the gap tube is improved, and thereby also cooling of the motor.

In embodiments, the electrical machine comprises a **coolant bypass** arranged in fluid communication with the coolant gap, the coolant gap and coolant bypass being supplied by a **coolant supply conduit** and discharged by a **coolant discharge conduit.**

This allows to guide part of the flow of the coolant medium through the coolant bypass, which in turn prevents temperature variations of the inflowing coolant medium from strongly affecting the temperature of the bushing. The volume of coolant medium in the coolant gap acts as a buffer, absorbing heat energy from the bushing and transmitting it through the stator body to the coolant bypass, at which it is carried away by convection. The volume of the coolant medium in the coolant gap increases the thermal inertia of the motor in the region around the bushing. These effects are present also with a relatively low flow of coolant medium through the coolant gap.

In embodiments, the coolant gap and coolant bypass are shaped so that a proportion of the flow of coolant passing through the coolant gap is less than 50%, in particular less than 30%, more in particular less than 10% of a total flow through the coolant gap and coolant bypass.

In embodiments, the electrical machine comprises a **coolant bypass** and a **coolant reservoir,** the coolant reservoir being in fluid communication with the coolant gap, or being without fluid communication with the coolant gap, or being identical to the coolant gap,
the coolant bypass being supplied by a **coolant supply conduit** and discharged by a **coolant discharge conduit,** and
the coolant reservoir being cooled by the coolant bypass by heat conduction through a wall separating the coolant reservoir and the coolant bypass.

In particular, a **connection** between the coolant bypass and coolant reservoir is established by means of one of
- a **single conduit** between the coolant bypass and coolant reservoir,
- **two conduits** between the coolant bypass and coolant reservoir,
- one or more conduits with **pressure equalisation diaphragms,**
- one or more conduits with **flow restricting elements.**

This allows to transport thermal energy away from the coolant gap to the coolant reservoir, with the coolant reservoir acting as a buffer for absorbing and dissipating the thermal energy, and also for dampening changes in the temperature of the inflowing coolant medium. In embodiments, a volume of the coolant reservoir is larger than a volume of the coolant gap, in particular at least twice or three times as large. The coolant reservoir can be arranged in the stator body or outside of the stator body. In the latter case, it is in fluid communication with the coolant gap,

In embodiments, the coolant gap and coolant reservoir are shaped in a single piece of material. This makes it easier to make the combination of coolant gap and coolant reservoir liquid-tight. The single piece can be part of or constitute the stator body.

According to an aspect of the invention, the coolant reservoir is implemented independently of the fact that coolant medium is present in the coolant gap. In such a case, the coolant reservoir acts to increase the thermal inertia of the stator body. There is no need for a flow of the coolant into and out of the reservoir. The thermal capacity of liquids such as water or Alcohol is significantly larger than that of aluminum, steel or copper. Therefore, the thermal inertia of the stator body is increased by the presence of the coolant reservoir, and changes in temperature of the inflowing coolant medium and/or transient peaks in the flow of thermal energy from the journal bearings are absorbed better than would be the case without the coolant reservoir.

The electrical machine according to this aspect comprises a stator with a **stator body** supporting an electrical stator and a rotor, the rotor being supported by means of a bearing comprising a **radial bearing section** forming a radial **gas** bearing and an **axial bearing section** forming an axial **gas** bearing, the stator side parts of these bearing sections comprising an **axial bearing assembly** and a **bushing,**
wherein
- the bushing is radially surrounded by the stator body,
- a **coolant reservoir** is present in the stator body, filled with a coolant medium that has a higher thermal capacity than the material of the stator body, in particular at least two or at least three or at least four or at least five times as high, and
- the coolant reservoir is cooled by a coolant bypass by heat conduction through a wall separating the coolant reservoir and the coolant bypass, the coolant bypass being supplied with coolant medium by a coolant supply conduit and discharged by a coolant discharge conduit.

In embodiments, the coolant medium is a fluid. In embodiments, the coolant medium in the coolant reservoir remains in the stator body during operation of the electrical machine. That is, thermal energy is not carried away by convection with the coolant medium in the coolant reservoir. The coolant reservoir acts as a stationary buffer for absorbing thermal energy.

In embodiments according to this aspect, the coolant reservoir can be in fluid communication with the coolant gap, or can be without fluid communication with the coolant gap, or the coolant reservoir can be identical to the coolant gap.

In embodiments, a coolant supply conduit supplying at least one of the coolant gap and coolant bypass passes through elements arranged to dampen variations in the temperature of the coolant medium flowing into the coolant supply conduit.

As a result, adverse effects of such variations in temperature on the bushing and radial bearing (and/or axial bearing, as the case may be) are reduced or eliminated. Otherwise, such variations could affect the operation of the machine.

In embodiments, the coolant supply conduit comprises a **coolant inlet reservoir** acting as a reservoir for the coolant medium flowing through the coolant supply conduit, in particular wherein a flow area in the coolant inlet reservoir is at least two or at least three or at least four or at least five times the flow area of adjacent sections of the coolant supply conduit. This serves to dampen variations in the temperature of the incoming coolant medium.

In embodiments, the coolant supply conduit passes through a **heat exchanger** arranged to exchange thermal energy with parts of the electrical machine, in particular wherein the coolant supply conduit runs along a circumferential direction of part of the electrical machine, in particular of the stator body or the electrical stator, for at least half a turn, that is, 180°.

This couples the coolant supply conduit to the thermal inertia of these parts of the electrical machine, evening out variations in temperature of the coolant medium.

In embodiments, the heat exchanger is implemented by channels shaped in the respective parts, in particular by channels shaped in the stator body and/or channels shaped in the electrical stator.

In embodiments, the coolant gap and coolant bypass or coolant reservoir implement a **heat pipe,** for transporting thermal energy away from the coolant gap.

That is, the coolant medium is chosen so that it is present in both its vapor and liquid state over the machine's operating temperature range.

In embodiments, the coolant medium is a gas, in particular one of
- air,
- a gas with a higher thermal conductivity than air, such as Neon, Helium, and in particular wherein a radial distance between the bushing and inner surface of the stator body is smaller than 0.2 mm, in particular smaller than 0.1 mm.

This allows to transport thermal energy away from the bushing, even if the fluid is only a gas, thanks to the small size of the gap.

The axial direction corresponds to the axis of rotation of the rotor and shall also be called longitudinal direction.

In embodiments, the axial bearing assembly is rigidly mounted to the stator body. Optionally, the bushing is rigidly connected to the axial bearing assembly.

In embodiments, the bushing is rigidly mounted to the stator body near one end of the bushing. Optionally, the bushing is elastically supported by the stator body near the opposite end of the bushing.

As a result, the bushing is rigidly attached, at one end, e.g. by the axial bearing part, and the remainder of the bushing is elastically suspended - which eliminates or reduces mechanical stress - but can be thermally coupled to the cooling body.

The j oumal bearings can be integrated into a single part, thus precise alignment can be easier to achieve than with journal bearings on separate parts.

In embodiments, the radial bearing section of the bushing extends in the longitudinal direction of the axis of rotation and all bearing elements and cooperating rotor bearing surfaces of the radial bearing section lie outside the magnetic gap between the electrical stator and the rotor.

This means, in other words, that the machine is of the overhanging type, that is, the journal bearing, or the bushing and the cooling body, respectively, are located at different locations than the electrical stator and permanent magnet, when seen along the longitudinal axis of the machine.

Here and throughout this document, the terms "rigidly" and "fixed" are used as opposed to "elastically". An elastic connection has a spring rate or a Young's modulus that is at least, for example, 100 or 10'000 or 1'000'000 times larger than in a rigid connection.

A rigid connection is a connection designed such that the connected parts do not move relative to one another during normal operation of the machine. Thus, a rigid connection can be established by screwing parts together or by pressing them against one another with a spring. In this case, the spring is not part of the rigid connection but provides a force that maintains rigidity of the connection.

An elastic support can be an O-ring, typically of a (synthetic) rubber, or a metallic spring.

The term "high speed electrical machine" is taken to cover machines that are suited for more than 100'000 revolutions per minute.

The gas of the gas bearing can be any gas the machine operates in, such as air, a cooling agent, natural gas etc. The gas bearing can be a passive or an active gas bearing.

The bushing can be made of a ceramic material or another material that provides sufficient mechanical stiffness and does not affect the magnetic field in the magnetic air gap. The advantage of ceramic materials is that they are suited both for gas bearings and can be placed in the magnetic air gap, where they are penetrated by the torque generating magnetic field. Generally, electrical insulators or materials with low electrical conductivity such as ceramics, glass ceramics or technical glasses, plastics, composites, mineral materials etc. can be used to avoid excessive eddy current losses caused by the alternating magnetic air gap field.

In embodiments, the electrical machine is of the slotless type. In other words, the electrical stator comprises an air gap winding rather than slotted windings. In other embodiments, the electrical machine is of the slotted type.

Typically, the stator body houses the electrical stator. "Materially bonded", also called "substance-to-substance bonded" typically is done by a shrink fit or by potting, welding or soldering.

In embodiments, the stator flange forms at least part of a wall of a coolant channel. This allows for the coolant to efficiently cool both the stator body and the cooling body.

The terms "axially adjacent" and "radially adjacent" are understood to mean "adjacent when seen in the direction of the axis of rotation" and "adjacent when seen in a radial direction", respectively.

In embodiments, gap bars, being elongated elements or rods, are present instead of the gap tube. Gap bars can be arranged in the slots of a slotted electrical machine.

The gap tube or gap bars are thus arranged, seen in an axial direction along the longitudinal axis of rotation, at least at locations where the permanent magnet is present.

Typically, the gap tube is arranged in the magnetic gap between the electrical stator and the rotor.

In order for the gap tube or gap bars to be electrically non-conducting and thermally conducting, they can be made of a ceramic material with high thermal conductivity, for example higher than 20 W/°K/m or 40 W/°K/m or 60 W/°K/m or 100 W/°K/m or 140 W/°K/m such as Aluminium Nitride or Silicon Carbide or certain grades of Silicon Nitride.

In embodiments, the gap tube form part of an airtight separation between the electrical stator and the rotor. This allows to separate the air bearings, which are sensitive to contamination by small particles, from the spaces inside the stator body, which generally are prone to being contaminated.

Further embodiments are evident from the dependent patent claims.

The subject matter of the invention will be explained in more detail in the following text with reference to exemplary embodiments which are illustrated in the attached drawings, which schematically show:
- Figure 1: a longitudinal cross section of main elements of an electrical machine with journal bearings and a cooled bushing;
- Figure 2: an embodiment with a cooled inner stator disc;
- Figure 3 - 4: a flow of coolant medium around the bushing;
- Figure 5-6: the same, with coolant guiding structures on the bushing or stator body;
- Figure 7: cooling of a gap tube;
- Figure 8 - 9: coolant flow topologies with a coolant bypass;
- Figure 10: a structure with a coolant inlet reservoir;
- Figure 11: a structure with a heat exchanger in the stator body; and
- Figure 12: a structure with a heat pipe.

In principle, identical or functionally identical parts are provided with the same reference symbols in the figures.

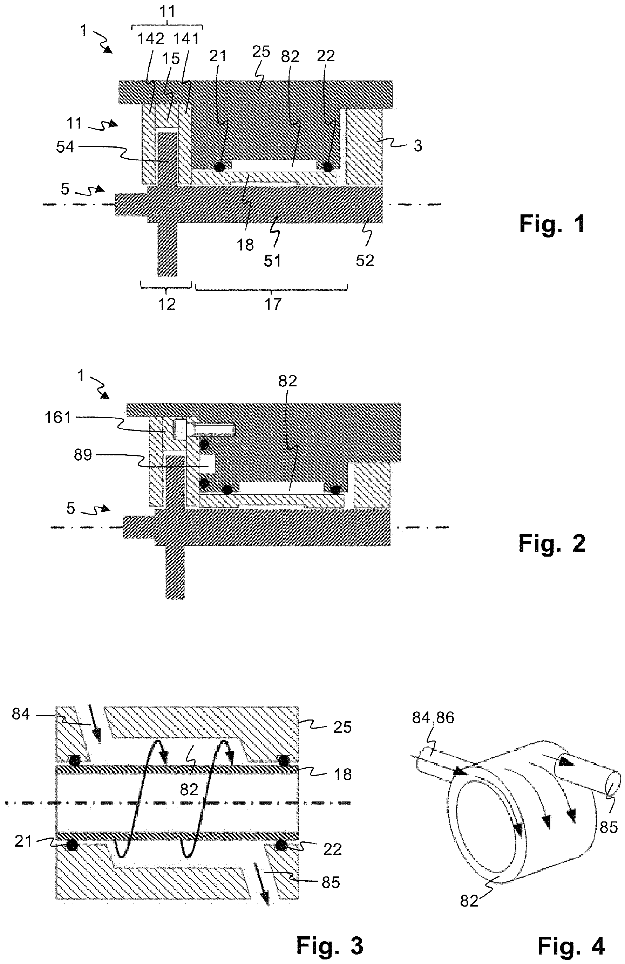

**Figure 1** shows a longitudinal cross section of main elements of an electrical machine with journal bearings and a cooled bushing. For clarity, the mirror images of some elements are not drawn. The machine comprises a stator 1 and a rotor 5. The stator 1 comprises a stator body 25 supporting an axial bearing assembly 11 and a bushing 18. The axial bearing assembly 11 and a rotor disc 54 of the rotor 5 form an axial journal bearing, the bushing 18 and a shaft 51 of the rotor 5 form a radial journal bearing. Seen in the direction of the rotor axis, these bearings lie in an axial bearing section 12 and radial bearing section 17, respectively. The axial bearing assembly 11 comprises an inner stator disc 141 and outer stator disc 142, with a spacer element 15 in between. The inner stator disc 141 can be attached to the stator body 25 by an inner fastener 161 **(****Figure 2**). The axial bearing assembly 11 can be (not shown) compressed and held in place by an outer fastener or part of a stator housing or an impeller housing. An electrical stator 3 is arranged around a section of the rotor 5 comprising a permanent magnet 52, for driving the rotor 5. In operation of the machine, windage losses in the axial bearing section 12 and radial bearing section 17 heat up the respective bearings, and give rise to the need to transport thermal energy away from the bearings.

The bushing 18 is elastically supported in the stator body 25 by a first radial elastic support 21 and a second radial elastic support 22. It can be rigidly attached to the axial bearing assembly 11, in particular the inner stator disc 141. By being supported in this way, the bushing 18 remains in a fixed position relative to the axial bearing assembly 11 and is not affected by deformations of the stator body 25, typically induced by changes in temperature. The two elastic supports 21, 22 typically are implemented by O-rings, shown in the figures in cross section as filled circles.

Around the bushing 18, a volume is present between the bushing 18 and the stator body 25 where the stator body 25 surrounds the bushing 18. The stator body 25 is shown as a single part, but can also be implemented by two or more parts, rigidly attached to one another. In embodiments, such parts can be also attached to one another in a resilient manner, for example with an inner part of the stator body 25 surrounding the bushing 18, the inner part being elastically supported in an outer part of the stator body 25. This volume acts as coolant gap 82, for containing or guiding a coolant medium 81 to absorb thermal energy from the bushing 18. **Figure 2** shows a coolant conduit 89 shaped in the stator body 25, for guiding coolant medium 81 to be in contact with and for cooling the inner stator disc 141.

**Figure 3-4** shows a flow of coolant medium around the bushing and through the coolant gap 82. The flow is induced to be helically along the outer circumference of the bushing 18. This can be done by guiding the coolant medium 81 into the coolant gap 82 through a coolant supply conduit 84 tangentially to the cylindrical shape of the coolant gap 82 at one end of the coolant gap 82. At the other end, a coolant discharge conduit 85 can also be arranged tangentially.

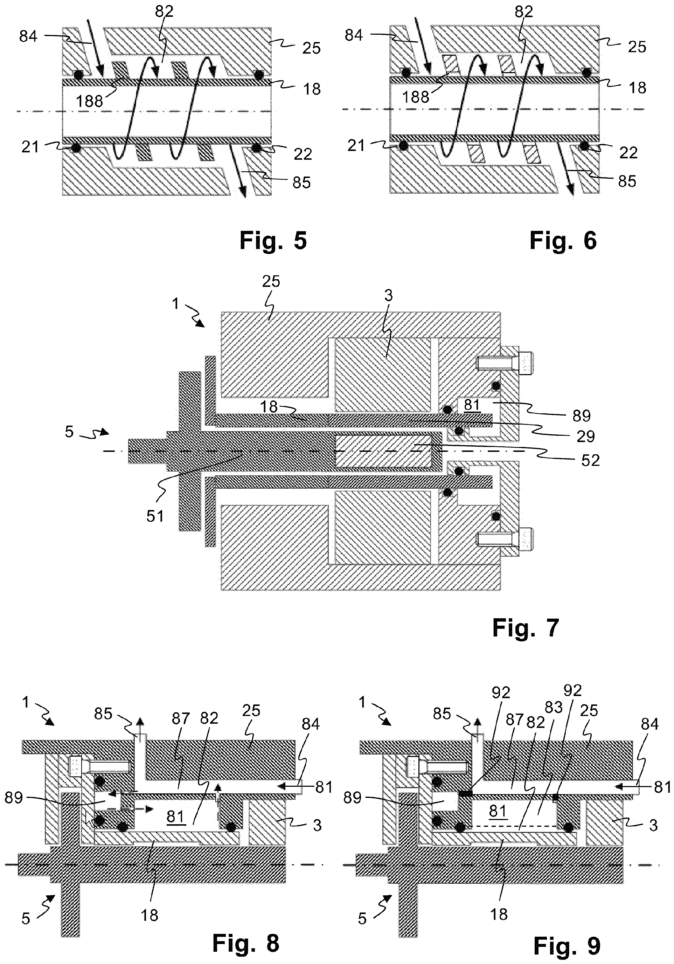

**Figure 5-6** shows the same, with coolant guiding structures 188 arranged on or being part of the bushing or stator body. These coolant guiding structure 188 aid to guide the flow coolant medium 81 along the helical path around and along the coolant gap 82.

**Figure 7** shows cooling of a gap tube 29. The gap tube 29 is arranged in the magnetic gap between the electrical stator 3 and the shaft 51 in the region of the permanent magnet 52. The gap tube 29 needs to be cooled, and this can be done by extending part of it into a coolant conduit 89 arranged to carry the coolant medium 81 around this part. O-rings or other gaskets are arranged around the inside and outside cylindrical surfaces of the gap tube 29 in order to keep the coolant medium 81 away from the electrical motor. Instead of the gap tube 29 being a hollow cylinder, separate gap rods can be present.

**Figure 8-9** shows coolant flow topologies with a coolant bypass 87. The entire coolant flow or part of the coolant flow from the coolant supply conduit 84 is guided via the coolant bypass 87 to the coolant discharge conduit 85. Thanks to the bypass, temperature changes in the incoming coolant medium 81 are not transmitted to the coolant gap 82 and the bushing 18.

In the embodiment of **Figure 8****,** part of the coolant flow passes through the coolant gap 82 and the coolant conduit 89 cooling the axial bearing assembly, and another part through the coolant bypass 87.

In the embodiment of **Figure 9****,** the entire coolant flow passes through the coolant bypass 87. The coolant medium 81 in the coolant gap 82 and/or the coolant conduit 89 remains stationary. It serves as a buffer for absorbing thermal energy, without carrying it away by convection. It is cooled through the wall between e.g. the coolant gap 82 and the coolant bypass 87. The coolant gap 82 can be relatively wide, forming a coolant reservoir 83.

According to embodiments, the coolant gap 82 is separated from a coolant reservoir 83. In **Figure 9****,** such a separation is represented by a dashed line. In such embodiments, the coolant gap 82 can be in fluid communication with the coolant reservoir 83, or without fluid communication. In the latter case, they can comprise different fluids, for example a gas in the coolant gap 82 and a liquid in the coolant reservoir 83.

In embodiments, the coolant gap 82 (or the coolant reservoir 83) is in fluid connection with the other volumes carrying the coolant medium 81 by flow restricting elements 92. This allows a low flow between these volumes, for filling the volumes and for a limited transport of energy by convection. Such elements can be implemented by small apertures or porous elements, etc. Alternatively, they can be replaced by elastic membranes for pressure equalisation.

In all the embodiments described in relation to **Figure 9** it is the case that thermal energy is transported away from the bushing 18 via the coolant gap 82, coolant reservoir 83 and the coolant bypass 87, with the coolant reservoir 83 acting as a buffer absorbing changes in temperature of the bushing 18 as well as of the coolant medium 81 entering at the coolant supply conduit 84.

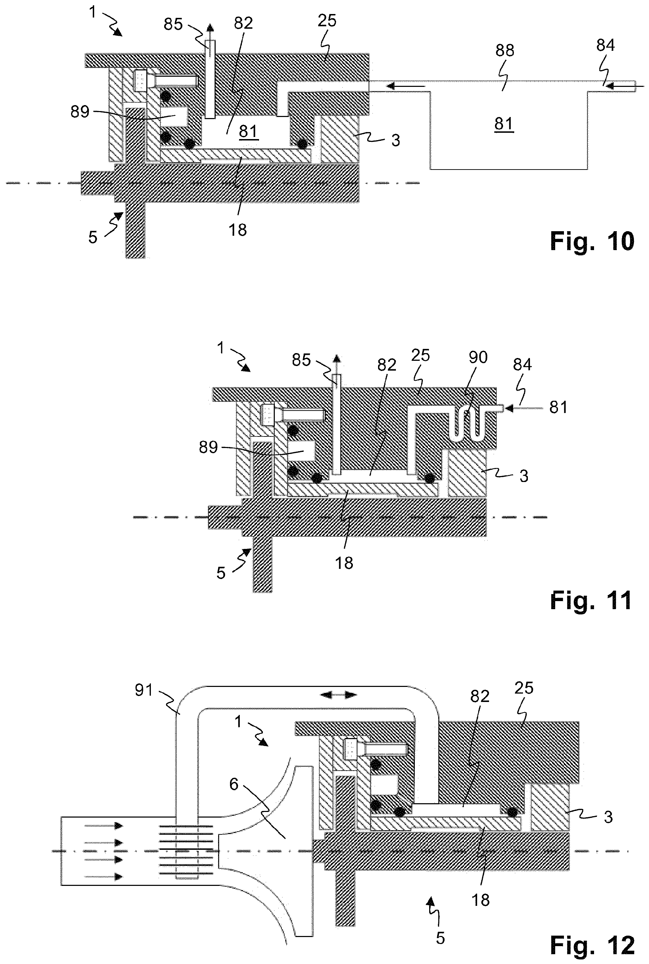

**Figure 10** shows a structure with a coolant inlet reservoir 88. The coolant inlet reservoir 88is part of the coolant supply conduit 84 and has a relatively large volume or flow section relative to other sections of the coolant supply conduit 84. This causes the flow of coolant medium 81 to be buffered in the coolant inlet reservoir 88, and evens out temperature changes in the inflowing coolant medium 81.

**Figure 11** shows a structure with a heat exchanger 90 in the stator body 25. The heat exchanger 90 evens out temperature changes in the inflowing coolant medium 81 by the exchange of thermal energy with the stator body 25. The heat exchanger 90 can be implemented by channels shaped in the stator body 25 and/or in part of the electrical stator 3. Such channels can have a meandering shape and/or extend around the circumference of periphery of the stator body 25 or electrical stator 3. They can run around the stator body 25 or electrical stator 3 for half their circumference or more. They can run along the stator body 25 or electrical stator 3 for half their length or more.

**Figure 12** shows a structure with a heat pipe 91 arranged to transport thermal energy from the coolant gap 82 to a heat sink, in this example the heat sink is arranged in a working medium pumped by an impeller 6 driven by the electrical machine.

While the invention has been described in present embodiments, it is distinctly understood that the invention is not limited thereto, but may be otherwise variously embodied and practised within the scope of the claims.

## Claims

1. An electrical machine comprising a stator (1) with a **stator body** (25) supporting an electrical stator (3) and a rotor (5), the rotor (5) being supported by means of a bearing comprising a **radial bearing section** (17) forming a radial **gas** bearing and an **axial bearing section** (12) forming an axial **gas** bearing, the stator side parts of these bearing sections comprising an **axial bearing assembly** (11) and a **bushing** (18),
wherein
• the bushing (18) is radially surrounded by the stator body (25),
• a **coolant gap** (82) is present between the bushing (18) and the stator body (25), the coolant gap (82) preferably extending around the entire circumference of the bushing (18),
• a fluid **coolant medium** (81) is present in the coolant gap (82).

2. The electrical machine of claim 1, wherein the bushing (18) is supported in the stator body (25) by at least one **elastic support** (21, 22).

3. The electrical machine of one of the preceding claims, wherein the coolant gap extends along at least 60% or 70% or 80% or 90% or 100% of the bushing (18).

4. The electrical machine of one of the preceding claims, comprising **coolant conduits (89)** guiding the coolant medium (81), the coolant conduits being shaped by grooves in a surface at which an **inner stator disc** (141) faces the stator body (25) at a **contact surface** of the stator body (25), and/or grooves in the contact surface.

5. The electrical machine of one of the preceding claims, comprising coolant guiding elements shaped to induce a helical flow of the coolant medium (81) around an outer surface of the bushing (18).

6. The electrical machine of claim 5, wherein the coolant guiding elements are at least one of
• a **coolant inlet plenum** (86) arranged to guide the coolant medium (81) into the coolant gap (82) along a helical path,
• **coolant guiding structures** (188) on an outer surface of the bushing (18) facing the stator body (25),
• coolant guiding structures (188) on an inner surface of the stator body (25) facing the bushing (18).

7. The electrical machine of one of the preceding claims, wherein an electrically non-conducting and thermally conducting **gap tube** (29) or **gap bars** are attached to the stator (1) at an axial position along the rotor (5) at which the rotor (5) comprises a permanent magnet (52), and wherein the coolant medium (81) is guided to come into contact with the gap tube (29) or gap bars, for cooling the gap tube (29) or gap bars.

8. The electrical machine of one of the preceding claims, comprising a **coolant bypass** (87) arranged in fluid communication with the coolant gap (82), the coolant gap (82) and coolant bypass (87) being supplied by a **coolant supply conduit** (84) and discharged by a **coolant discharge conduit** (85).

9. The electrical machine of claim 8, wherein the coolant gap (82) and coolant bypass (87) are shaped so that a proportion of the flow of coolant passing through the coolant gap (82) is less than 50%, in particular less than 30%, more in particular less than 10% of a total flow through the coolant gap (82) and coolant bypass (87).

10. The electrical machine of one of claims 1 to 7, comprising a **coolant bypass** (87) and a **coolant reservoir** (83), the coolant reservoir (83) being in fluid communication with the coolant gap (82), or being without fluid communication with the coolant gap (82), or being identical to the coolant gap (82),
the coolant bypass (87) being supplied by a **coolant supply conduit** (84) and discharged by a **coolant discharge conduit** (85), and
the coolant reservoir (83) being cooled by the coolant bypass (87) by heat conduction through a wall separating the coolant reservoir (83) and the coolant bypass (87),
in particular wherein a **connection** between the coolant bypass (87) and coolant reservoir (83) is established by means of one of
• a **single conduit** between the coolant bypass (87) and coolant reservoir (83),
• **two conduits** between the coolant bypass (87) and coolant reservoir (83),
• one or more conduits with **pressure equalisation diaphragms,**
• one or more conduits with **flow restricting elements.**

11. The electrical machine of one of claims 1 to 9, wherein a coolant supply conduit (84) supplying at least one of the coolant gap (82) and coolant bypass (87) passes through elements arranged to dampen variations in the temperature of the coolant medium flowing into the coolant supply conduit (84).

12. The electrical machine of claim 11, wherein the coolant supply conduit (84) comprises a coolant inlet reservoir (88) acting as a reservoir for the coolant medium (81) flowing through the coolant supply conduit (84), in particular wherein a flow area in the coolant inlet reservoir (88) is at least two or at least three or at least four or at least five times the flow area of adj acent sections of the coolant supply conduit (84).

13. The electrical machine of claim 11 or 12, wherein the coolant supply conduit (84) passes through a **heat exchanger** arranged to exchange thermal energy with parts of the electrical machine, in particular wherein the coolant supply conduit (84) runs along a circumferential direction of part of the electrical machine, in particular of the stator body (25) or the electrical stator (3) for at least half a turn, that is, 180°.

14. The electrical machine of one of the preceding claims, wherein the coolant gap (82) and coolant bypass (87) or coolant reservoir (88) implement a **heat pipe (91),** for transporting thermal energy away from the coolant gap (82).

15. The electrical machine of one of claims 1 to 13, wherein the coolant medium (81) is a gas, in particular one of
• air,
• a gas with a higher thermal conductivity than air, such as Neon, Helium,
and
in particular wherein a radial distance between the bushing (18) and inner surface of the stator body (25) is smaller than 0.2 mm, in particular smaller than 0.1 mm.
